# EUROPÄISCHE PATENTANMELDUNG

(11) **EP 1 617 284 A1**
(43) Veröffentlichungstag der Anmeldung: **18.01.2006**
(21) Anmeldenummer: 04016313.1
(22) Anmeldetag: 12.07.2004
(51) Int. Cl.: G03B 21/20, G03B 21/28

(54) **Beleuchtungssystem für einen Kinoprojektor**

(71) Anmelder: BCI Finanz AG, 6302 Zug (CH)
(72) Erfinder: Linge, Horst, 34260 Kaufungen (DE); Bretthauer, Bernward, 37073 Göttingen (DE)
(74) Vertreter: Quermann, Helmut

(57) **Zusammenfassung**

Die Erfindung schlägt ein Beleuchtungssystem für einen Kinoprojektor mit folgenden Merkmalen vor:
- eine Lampe (3),
- einen Reflektor (1) zur Bündelung des Lichts, wobei die numerische Apertur (Sinus a) des Reflektors größer ist als die numerische Apertur (Sinus c) des Projektionsobjektivs (11) des Kinoprojektors,
- eine Streulinse (5) zur Anpassung der numerischen Apertur des Reflektors an die numerische Apertur des Projektionsobjektivs,
- einen Integratorstab (4), der durch Totalreflektion an den Außenseiten für eine gleichmäßige Beleuchtung der Filmebene (10) sorgt, wobei entweder der Integratorstab (4) eine konvexe Austrittsfläche (9) aufweist, die die Lichtkegel in die Pupille des Projektionsobjektivs lenkt,
oder der Integratorstab eine plane Austrittsfläche (15) aufweist, und hinter dem Integratorstab eine separate Sammellinse angeordnet ist, die den Lichtkegel in die Pupille des Projektionsobjektivs lenkt.

## Beschreibung

Die Erfindung betrifft ein Beleuchtungssystem für einen Kinoprojektor.

Im Bereich des klassischen Kinos wird das Filmfenster direkt mittels eines Ellipsoid-Reflektors beleuchtet. Im ersten Brennpunkt des Ellipsoid-Reflektors befindet sich eine Xenon-Lampe, der zweite Brennpunkt liegt hinter der Filmebene. Die Lichtverteilung auf der Filmebene wird eingestellt, indem die Xenon-Lampe entlang der optischen Achse verschoben wird. Diese Methode hat den Nachteil, dass eine hohe Gleichmäßigkeit der Beleuchtung mit starken Lichtverlusten erkauft wird. Es gibt eine maximale relative Eckhelligkeit, die auch unter Inkaufnahme noch höherer Verluste nicht mehr verbessert werden kann. Zu weiteren Verlusten kommt es dadurch, dass der Ellipsoid-Reflektor eine rotationssymmetrische Ausleuchtung erzeugt, während die Filmformate rechteckig sind.

Im Bereich der digitalen Projektoren finden Integratorsysteme Verwendung, die mittels eines Integratorstabs für eine gleichmäßige Ausleuchtung bei geringem Verlust sorgen. Bei dem Integratorstab handelt es sich entweder um einen rechteckigen Stab aus Glas oder Quarz. An den Wänden des Stabs kommt es zur Totalreflektion, so dass jeder Lichtstrahl, der in den Stab eintritt, abhängig von Eintrittsposition und Winkel mehr oder weniger häufig reflektiert wird. Dadurch kommt es zu einer gleichmäßigen Verteilung des Lichts an der Austrittsfläche. Die Austrittsfläche wird nun mittels einer Relay-Optik auf den Chip des Projektors abgebildet. Alternativ zum Glasstab wird ein innenverspiegelter rechteckiger Tunnel eingesetzt; anstelle der Totalreflektion tritt jetzt die Reflektion an der Spiegelfläche, ansonsten ist das Prinzip identisch.

Die optische Ausführung der Stabintegratoren lässt sich aus verschiedenen Gründen von den digitalen Projektoren nicht direkt auf Kinoprojektoren übertragen. Bedingt durch die Größe der verwendeten Xenon-Lampen würde das Gesamtsystem zu groß, um in den Projektor zu passen. Außerdem verwenden digitale Projektoren üblicherweise einen telezentrischen Strahlengang, die vorhandenen Projektionsobjektive sind jedoch nicht telezentrisch. Für eine Akzeptanz eines neuen Beleuchtungssystems ist es aber notwendig, so weit wie möglich auf vorhandene Komponenten zurückzugreifen, insbesondere müssen am Markt vorhandene Objektivserien und Xenon-Lampen einsetzbar sein.

Aufgabe der Erfindung ist es, ein Beleuchtungssystem für einen Kinoprojektor zu schaffen, das kompakt ist und eine hohe Gleichmäßigkeit bei hohem Wirkungsgrad sicherstellt.

Die Erfindung schlägt ein Beleuchtungssystem für einen Kinoprojektor, mit folgenden Merkmalen vor:
- eine Lampe,
- einen Reflektor zur Bündelung des Lichts, wobei die numerische Apertur des Reflektors größer ist als die numerische Apertur des Projektionsobjektivs des Kinoprojektors,
- eine Streulinse zur Anpassung der numerischen Apertur des Reflektors an die numerische Apertur des Projektionsobjektivs,
- einen Integratorstab, der durch Totalrelektion an den Außenseiten für eine gleichmäßige Beleuchtung der Filmebene sorgt, wobei entweder
   der Integratorstab eine konvexe Austrittsfläche aufweist, die die Lichtkegel in die Pupille des Projektionsobjektivs lenkt,
   oder
   der Integratorstab eine plane Austrittsfläche aufweist, und hinter dem Integratorstab eine separate Sammellinse angeordnet ist, die die Lichtkegel in die Pupille des Projektionsobjektivs lenkt.

Zur Platzersparnis wird somit ein Reflektor verwendet, dessen numerische Apertur deutlich größer ist als die numerische Apertur des Projektionsobjektivs. Die numerische Apertur des Spiegels wird mittels der Streulinse auf die numerische Apertur des Projektionsobjektivs reduziert. Der Integratorstab sorgt für die gleichmäßige Ausleuchtung der Filmebene, die Linse oder die brechende Fläche am Austritt des Integratorstabs passt die Pupillenlage des Beleuchtungssystems an die Pupillenlage des Objektivs an.

Insbesondere wird ein Ellipsoid-Reflektor eingesetzt, dessen numerische Apertur deutlich höher ist als die numerische Apertur des verwendeten Projektionsobjektivs. Dadurch kann der Weg zwischen dem Reflektor und seinem zweiten Brennpunkt, und damit die Baulänge des gesamten Systems, kurz gehalten werden. Die Streulinse sorgt für die Anpassung der Reflektor-Apertur an die Apertur des Objektivs. Dieses verhindert unnötigen Lichtverlust durch nicht zueinander passende Aperturen.

Der Integratorstab sorgt für die gleichmäßige Ausleuchtung der Filmebene, damit entfallen die Verluste durch die Defokussierung der Lampe. Der Stab endet in möglichst kurzer Entfernung vor der Filmebene, typisch sind Entfernungen von 3 bis 4 mm. Die Austrittsseite des Integratorstabs ist mit einer konvexen Fläche versehen, um die austretenden Lichtbündel in Richtung der Pupille des Objektivs zu lenken. Dies ist notwendig, um am Markt vorhandene ObjektivSerien einsetzen zu können.

Alternativ ist der Integratorstab beidseitig mit planen Flächen versehen und es wird eine separate Linse hinter dem Integratorstab für die Bündelung des Lichts verwendet.

Kino-Projektoren verfügen über eine Sektorenblende, um während des Filmtransportes die Beleuchtung des Films abzudunkeln. Vorteilhafterweise wird diese Sektorenblende zwischen Streulinse und Integratorstab laufen. Alternativ kann der Integratorstab in zwei Teile unterteilt werden, um den Durchlauf der Blende zu ermöglichen.

Gemäß einer besonderen Weiterbildung der Erfindung ist vorgesehen, dass der Integratorstab oder der Integratorstab und die Sammellinse auswechselbar sind, entsprechend dem verwendeten Filmformat. Bei diesem Filmformat handelt es sich insbesondere um das Cinemascope- oder Breitbildformat, somit ein Format 2,35 : 1 bzw. 1,85 : 1, mit den Abmaßen 21,3 mm x 18,2 mm bzw. 20,9 mm x 11,3 mm.

Gemäß einer bevorzugten Weiterbildung ist schließlich vorgesehen, dass die Querschnittsabmessungen des Integratorstabs größer sind als die des Filmformats, insbesondere das jeweilige Querschnittsmaß des Integratorstabs 1 mm größer ist als das jeweilige Querschnittsmaß des Filmformats. Es ergibt sich somit ein Übermaß des Querschnittstabs von 1 mm in Länge und Breite. Die Konsequenz ist eine besonders gute Ausleuchtung des Bildformats im Randbereich.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand zweier bevorzugter Ausführungsbeispiele dargestellt, ohne auf diese beschränkt zu sein. Es zeigt:
- Figur 1: eine erste Ausführungsform des Beleuchtungssystems für einen Kino-Projektor, wobei die Eintrittsseite des Integratorstabs plan und die Austrittsseite des Integratorstabs mit einer konvexen Fläche versehen ist,
- Figur 2: eine zweite Ausführungsform des Beleuchtungssystems, wobei der Intergratorstab beidseitig mit planen Flächen versehen ist und eine separate Linse hinter dem Intergratorstab für die Bündelung des Lichts verwendet wird.

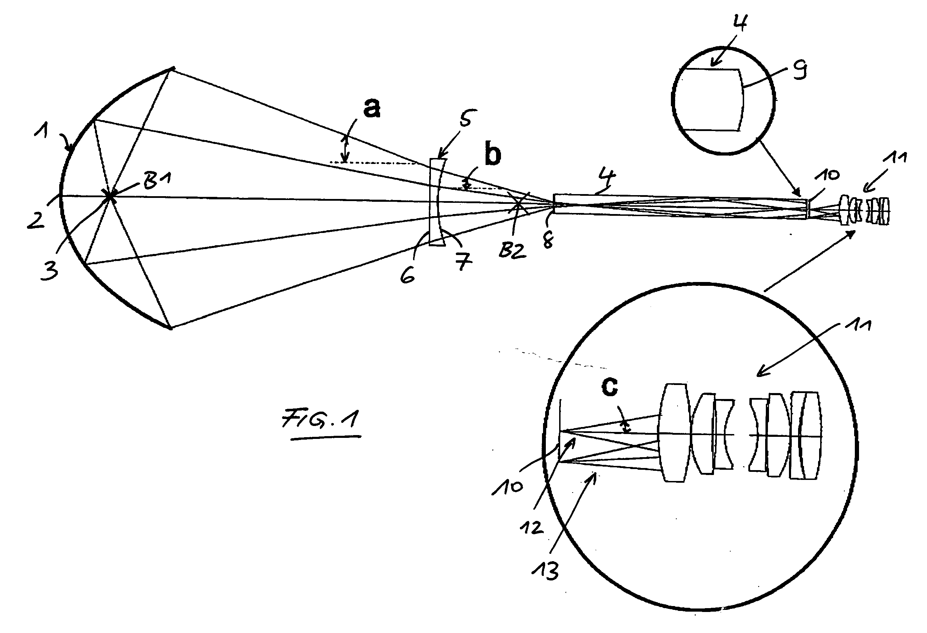

Für die erste Ausführungsform des Beleuchtungssystems gemäß der Figur 1 ist ein Ellipsoid-Reflektor 1 veranschaulicht, mit einem Durchmesser von 300 mm und zwei Brennpunkten B1 und B2, die 60 und 540 mm vom Scheitel 2 des Reflektors 1 entfernt sind. Der erste Brennpunkt B1 entspricht der Position der Xenon-Lampe 3. Zwischen dem Integratorstab 4 und dem Reflektor 1 ist die Streulinse 5 angeordnet. Sie besteht aus Quarz mit einer Mittendicke von 10 mm, mit einer planen Fläche 6 und einer konkaven Fläche 7 mit einem Radius von 137 mm. Die plane Fläche 6 zeigt zum Reflektor 1 und ist 440 mm vom Scheitel 2 des Reflektors 1 entfernt. Der Integratorstab 4 besitzt rechteckigen Querschnitt. Er besteht aus Quarz. Die Breite des Integratorstabs 4 beträgt 22,3 mm, die Höhe 19,2 mm und die Länge 300 mm. Die Eintrittsfläche 8 des Integratorstabs 4 ist plan und 588 mm vom Scheitel 2 des Reflektors entfernt. Die Austrittsfläche 9 des Integratorstabs 4 ist konvex, mit einem Radius von 83,5 mm. Die Austrittsfläche liegt nahe der Filmebene 10, insbesondere in einem Abstand von 3 mm. Hinter der Filmebene ist das Projektionsobjektiv 11 angeordnet.

Der kleinere in Figur 1 gezeigte Kreis veranschaulicht die Ausbildung der Austrittsfläche 9 des Integratorstabs 4 in vergrößertem Maßstab. Der größere Kreis in Figur 1 verdeutlicht den Strahlengang zwischen der Filmebene 10 und dem Projektionsobjektiv 11. Mit "a" ist der Aperturwinkel des Ellipsoidspiegels 1, mit "b" der durch die Streulinse 5 angepasste Aperturwinkel des Spiegels 1, mit "c" der Aperturwinkel des Projektionsobjektivs 11 bezeichnet. Die numerische Appertur Sinus a des Reflektors 1 ist deutlich größer als die numerische Apertur Sinus c des Projektionsobjektivs 11. Sie ist insbesondere mindestens 20 %, vorzugsweise 30 bis 60 % größer. Vorzugsweise beträgt die numerische Apertur Sinus a des Reflektors 0,325 bis 0,5 und die numerische Apertur Sinus c des Projektionsobjektivs 0,18 bis 0,27.

Zum großen Kreis der Figur 1 ist das zentrale Lichtbündel 12 veranschaulicht, ferner das Rand-Lichtbündel 13, das durch die konvexe Austrittsfläche in Richtung der Objektivpupille gelenkt wird, veranschaulicht.

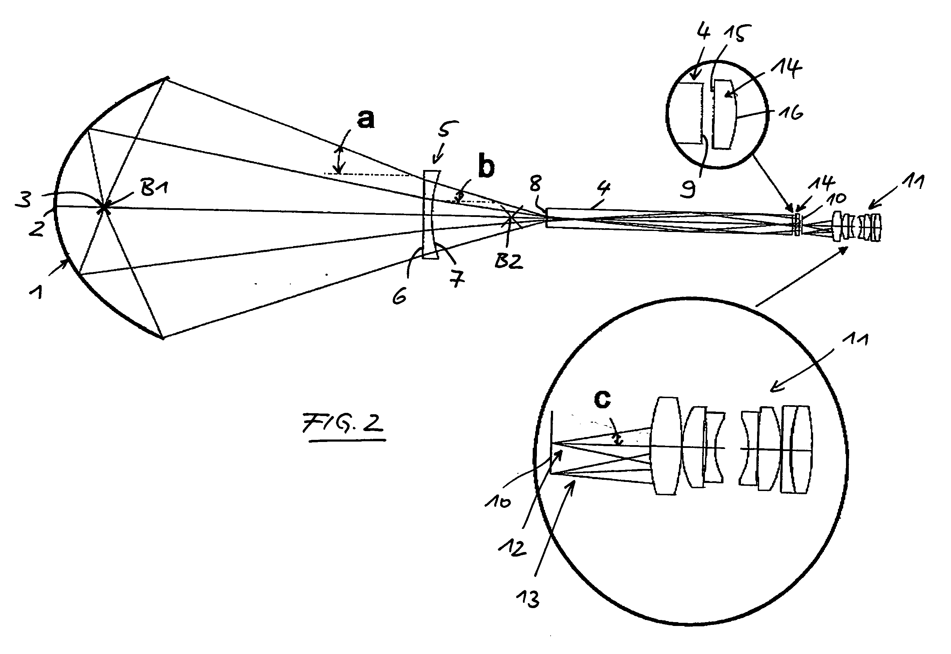

Die in der Figur 2 gezeigte Ausführungsform unterscheidet sich von derjenigen nach der Figur 1 nur dadurch, dass die Austrittsfläche 9 des Integratorstabs 4 plan ist und zwischen dem Integratorstab 4 und der Filmebene 10, somit hinter dem Integratorstab 4 eine separate Sammellinse 14, mit planer Eintrittsfläche 15 und konvexer Austrittsfläche 16, angeordnet ist, die den Lichtkegel in die Pupille des Projektionsobjektivs 11 lenkt.

Im übrigen wird bezüglich der Ausführungsform nach der Figur 2 und den auch zu dieser dargestellten beiden Kreisen auf die Erläuterungen bezüglich der Ausführungsform nach der Figur 1 verwiesen.

In beiden Figuren sind die Strahlengänge des Beleuchtungssystems veranschaulicht.

## Patentansprüche

1. Beleuchtungssystem für einen Kinoprojektor mit folgenden Merkmalen:
- eine Lampe (3),
- einen Reflektor (1) zur Bündelung des Lichts, wobei die numerische Apertur (Sinus a) des Reflektors (1) größer ist als die numerische Apertur (Sinus c) des Projektionsobjektivs (11) des Kinoprojektors,
- eine Streulinse (5) zur Anpassung der numerischen Apertur (Sinus a) des Reflektors (1) an die numerische Apertur (Sinus c) des Projektionsobjektivs (11),
- einen Integratorstab (4), der durch Totalreflektion an den Außenseiten für eine gleichmäßige Beleuchtung der Filmebene (10) sorgt, wobei der Integratorstab (4) eine konvexe Austrittsfläche (9) aufweist, die die Lichtkegel in die Pupille des Projektionsobjektivs lenkt (11).

2. Beleuchtungssystem für einen Kinoprojektor mit folgenden Merkmalen:
- eine Lampe (3),
- einen Reflektor (1) zur Bündelung des Lichts, wobei die numerische Apertur (Sinus a) des Reflektors (1) größer ist als die numerische Apertur (Sinus c) des Projektionsobjektivs (11) des Kinoprojektors,
- eine Streulinse (5) zur Anpassung der numerischen Apertur (Sinus a) des Reflektors (1) an die numerische Apertur (Sinus c) des Projektionsobjektivs (11),
- einen Integratorstab (4), der durch Totalreflektion an den Außenseiten für eine gleichmäßige Beleuchtung der Filmebene (10) sorgt, wobei der Integratorstab (4) eine plane Austrittsfläche (15) aufweist, und hinter dem Integratorstab (4) eine separate Sammellinse (14) angeordnet ist, die die Lichtkegel in die Pupille des Projektionsobjektivs (11) lenkt.

3. System nach Anspruch 1 oder 2, **dadurch gekennzeichnet, dass** die Lampe (3) als Xenon-Lampe ausgebildet ist.

4. System nach einem der Ansprüche 1 bis 3, **dadurch gekennzeichnet, dass** der Reflektor (1) als Ellipsoid-Reflektor ausgebildet ist.

5. System nach einem der Ansprüche 1 bis 4, **dadurch gekennzeichnet, dass** die numerische Apertur (Sinus a) des Reflektors (1) deutlich größer ist als die numerische Apertur (Sinus c) des Projektionsobjektivs (11), insbesondere mindestens 20 %, vorzugsweise 30 % bis 60 % größer ist.

6. System nach Anspruch 5, **dadurch gekennzeichnet, dass** die numerische Apertur (Sinus a) des Reflektors 0,325 bis 0,5 und die numerische Apertur (Sinus c) des Projektionsobjektivs (11) 0,18 bis 0,27 ist.

7. System nach einem der Ansprüche 1 bis 6, **dadurch gekennzeichnet, dass** der Integratorstab (4) als rechteckiger Stab ausgebildet ist.

8. System nach einem der Ansprüche 1 bis 7, **dadurch gekennzeichnet, dass** der Integratorstab (4) aus Glas oder Quarz besteht.

9. System nach einem der Ansprüche 1 bis 8, **dadurch gekennzeichnet, dass** der Integratorstab (4) als innenverspiegelter Tunnel ausgebildet ist.

10. System nach einem der Ansprüche 1 bis 9, **dadurch gekennzeichnet, dass** der Integratorstab (4) oder die Sammellinse (14) in kurzem Abstand vom Filmfenster (10) angeordnet ist, insbesondere in einem Abstand von 3 bis 4 mm.

11. System nach einem der Ansprüche 1 bis 10, **dadurch gekennzeichnet, dass** eine Sektorenblende des Kinoprojektors zwischen Streulinse (5) und Integratorstab (4) anordbar ist oder der Integratorstab (4) in zwei Teile unterteilt ist, wobei die Sektorenblende zwischen diesen beiden Teilen anordbar ist.

12. System nach einem der Ansprüche 1 bis 11, **dadurch gekennzeichnet, dass** der Integratorstab (4) oder der Integratorstab (4) und die Sammellinse (14) auswechselbar sind, entsprechend dem verwendeten Filmformat, insbesondere einem verwendeten Cinemascope- oder Breitbildformat.

13. System nach einem der Ansprüche 1 bis 12, **dadurch gekennzeichnet, dass** die Querschnittsabmessungen des Integratorstabs (4) größer sind als die des Filmformats, insbesondere das jeweilige Querschnittsmaß des Integratorstabs (4) 1 mm größer ist als das jeweilige Querschnittsmaß des Filmformats.

14. System nach einem der Ansprüche 1 bis 13, **gekennzeichnet durch** folgende Spezifikationen:
- einen Ellipsoid-Reflektor (1) mit einem Durchmesser von 300 mm und zwei Brennpunkten (B1, B2), die 60 mm und 540 mm vom Scheitel (2) des Reflektors (1) entfernt sind,
- eine Streulinse (5) aus Quarz mit einer Mittendicke von 10 mm, mit einer planen Fläche (6) und einer konkaven Fläche (7) mit einem Radius von 137 mm, wobei die plane Fläche (6) zum Reflektor (1) zeigt und 440 mm vom Scheitel (2) des Reflektors (1) entfernt ist,
- ein rechteckiger Integratorstab (4) aus Quarz, mit einer Breite von 22,3 mm, einer Höhe von 19,2 mm und einer Länge von 300 mm,
wobei die Eintrittsfläche (8) des Integratorstabs (4) plan und 588 mm vom Scheitel (2) des Reflektors (1) entfernt ist, wobei ferner die Austrittsfläche (9) des Integratorstabs (4) konvex ist, mit einem Radius von 83,5 mm und die Austrittsfläche (9) nahe an der Filmebene (10) liegt, insbesondere in einem Abstand von 3 mm.
